Europäisches Patentamt

European Patent Office

Office européen des brevets

(11) Publication number: **0 120 527**
**A1**

(19)

(12) **EUROPEAN PATENT APPLICATION**

(21) Application number: **84200301.4**

(22) Date of filing: **29.02.84**

(51) Int. Cl.³: **B 29 B 1/00**
**B 03 B 1/02, B 03 B 9/06**
**C 03 B 37/10, D 01 G 11/04**

(30) Priority: **02.03.83 NL 8300770**

(43) Date of publication of application:
**03.10.84 Bulletin 84/40**

(84) Designated Contracting States:
**AT BE CH DE FR GB IT LI LU NL SE**

(71) Applicant: **NEDERLANDSE CENTRALE ORGANISATIE**
**VOOR TOEGEPAST-NATUURWETENSCHAPPELIJK**
**ONDERZOEK**
**Juliana van Stolberglaan 148**
**NL-2595 CL The Hague(NL)**

(72) Inventor: **Smout, Adrianus Daniel**
**Middelbroekweg 32**
**NL-2675 KB Honselersdijk(NL)**

(72) Inventor: **Bree, Hendricus Willem**
**Granaathorst 145**
**NL-2592 ST The Hague(NL)**

(74) Representative: **van der Beek, George Frans et al,**
**Nederlandsch Octrooibureau Johan de Wittlaan 15 P.O.**
**Box 29720**
**NL-2502 LS The Haque(NL)**

(54) Method and apparatus for reclaiming the fibers from waste material of thermosetting synthetic material reinforced with fibers and the fiber material obtained herewith.

(57) The invention is related to a method and an apparatus for reclaiming glass fibres from thermosetting synthetic material reinforced with glass fibres. To promote the adherence of the glass fibers to said material the glass fibers are processed. The known method is expensive.

The invention aims to provide a relatively cheap method by means of which from the waste of thermosetting synthetic material, that is reinforced with fibers, the fibers can be removed in such a manner that the features related to the adherence of the synthetic material substantially are maintained.

The invention also aims to provide an apparatus for performing said method. Said apparatus being characterized by a supply path (1) for the waste material, a heating device (3) provided near said path, an abutment means (4) at the end of the path for holding the waste material, a number of openings (5) in the abutment means, a fiber-removing means (7) provided with protruding parts (6) and a drive means (9) to drive said fiber-removing means (7) and thereby moving the protruding parts (6) through the openings (5) of the abutment means (4).

fig-1

EP 0 120 527 A1

Method and apparatus for reclaiming the fibers from waste material
of thermosetting synthetic material reinforced with fibers and the
fiber material obtained herewith.

Firstly, the invention is related to a method for reclaiming fibers from thermosetting synthetic waste material that is reinforced with fibers.

By processing thermosetting synthetic material that is reinforced by glass fibers to corrugated sheets, boats, building panels, bumpers, caravans, pipes and a lot of other articles waste material is obtained. In particular the glass fibers of this waste material is rather expensive (e.g. f 6.-- to f 15.-- per kg) which in particular is a result of the processing to which it has to be subjected to promote the adherence of the thermosetting synthetic material to the fibers. For that reason attempts to reclaim the glass fibers are made. It is known to remove the synthetic material by burning. This process is difficult to control, in particular the control of the air supply raises problems. Moreover, the remaining glass fibers appear to be of low quality, in particular the features that promote the adherence are lost for the greater part.

Another method to process waste is to grind it to powder. This method is expensive. The fiber material gets lost.

The invention aims to provide a relatively cheap method by means of which from the waste of thermosetting synthetic material that is reinforced with fibers, the fibers can be removed in such a manner that the features related to the adherence of the synthetic material substantially are maintained.

According to the invention the method cited above is characterized by the fact that the waste material is heated to a temperature at which the mechanical features of the synthetic material are lost in substance and by the fact that the fibers are subsequently pulled out of the synthetic material by teeth, hooks, pins or such protruding parts.

The thermosetting synthetic materials usually are unsaturated polyesters, epoxy resins and polyurethan resins. But also other thermosetting synthetic materials - even rubbers - are not excluded.

As a result of the heating the mechanical features of the synthetic material will decline, and surprisingly it appeared that the fibers for the greater part can be removed undamaged along the mechanical way. The heating has to take place at a temperature at which a substantial softening of the synthetic material is obtained but naturally below the spontaneous ignition temperature, that is about 350°C for usual non-saturated polyester.

Preferably, the heating temperature of the waste is between 150°C to 350°C, preferably between 200°C to 300°C.

It has appeared that starting from a waste composition of about 60 % synthetic material and about 40 % glass fibers by the processing according to the invention a separation is obtained between about 65 % fiber material and about 30 % synthetic material. About 5 % disappears as volatile compounds and very fine dust. The fiber material still comprises about one third of adhered synthetic material and can be processed to a product without extra working together with new synthetic material. The coating on the fiber disappears partly by the processing according to the invention and gives a good transition for the connection with new synthetic material.

The method according to the invention is suitable for processing of cuttings, strips and panels. A completely automatic removal of the fibers is obtained in case the waste is advanced over a supply path along a heating device to an abutment means that is provided with openings, in which said protruding parts move through the openings of the abutment means and take away the fibers.

The invention also relates to a method for recovering the fibers from waste of thermosetting synthetic material reinforced with fibers. This apparatus is characterized by a supply path for waste material, a heating device provided near said path, an abutment means positioned at the end of the path for holding the waste material, and a number of openings provided in the abutment means, a fiber-removing member provided with protruding parts and a drive means to drive the fiber-removing means and thereby moving the protruding parts through the openings of the abutment means.

To remove the fibers from the protruding parts the teeth of a

3

comb may extend between said parts. Also the application of a brush is possible for this aim.

Finally, the invention is related to a fiber material that is obtained with the method according to the invention.

With the aid of the drawing in which more or less schematically an embodiment is shown the invention will be discussed in detail.

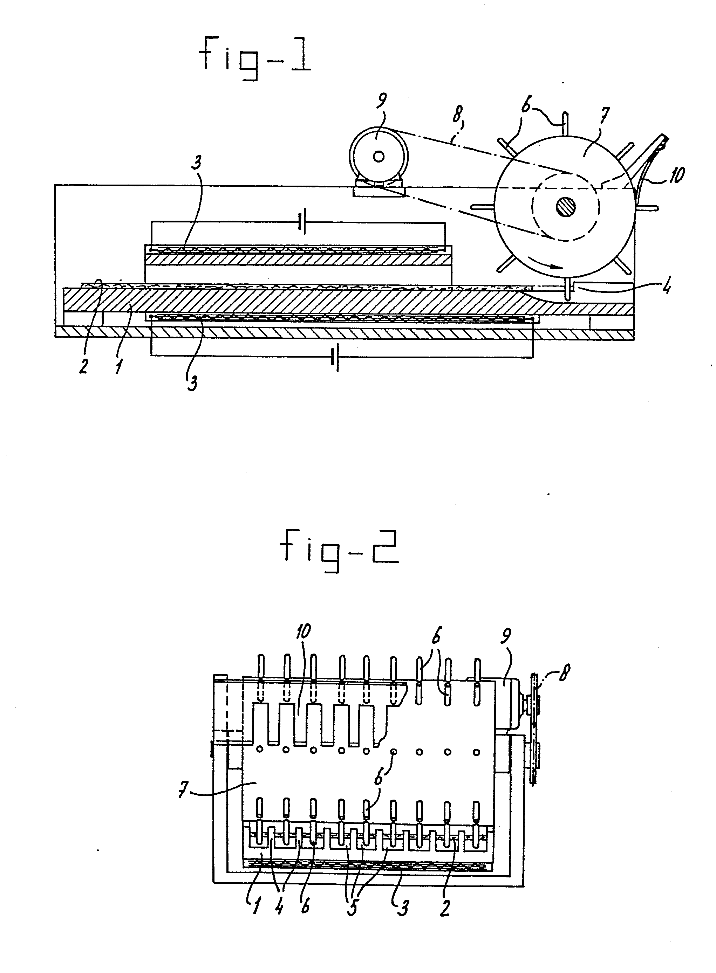

Fig. 1 shows a longitudinal section of the device.

Fig. 2 shows a front view.

The device shown comprises a supply path 1 for waste of thermosetting synthetic material that is reinforced with glass fibers. This waste, indicated with 2 may have the shape of cuttings, strips, panels etc. The path 1 extends through an electric heating device 3 for heating the waste material on path 1. At the end of path 1 an abutment 4 is provided for stopping the waste material. In this abutment openings or channels 5 are present through which the pens 6 of a cylinder 7 protrudes positioned above the path 1 and the abutment 4 extend that through transmission 8 can be driven by a motor 9. At the front side of cylinder 9 provided with said pens a comb 10 is provided from which the teeth extend between the pens 6.

The apparatus works as follows:

Waste of thermosetting synthetic material reinforced with glass fibers is supplied to the supply path 1 and is advanced along said path in the direction of abutment 4. The transport may take place in several manners for instance by an inclined positioning of the path 1, by means of a chain conveyor provided with catches or by means of a small conveyor belt. During the passage along the heating device waste material is heated to a temperature at which the thermosetting synthetic material becomes somewhat brittle. The mechanical strength of the synthetic material is thereby decreased to below the mechanical strength of the fibers. The temperature chosen will for the usual thermosetting synthetic material, such as unsaturated polyesters, epoxy resins and polyurethane resins be about 250°C. In any case the chosen value clearly has to be below the ignition temperature (e.g. about 350°C) and to be in the region in which the synthetic material is subjected to a substantial softening. The beginning of the softening for the above synthetic material is mostly at about 150°C.

The heated waste supply to path 1 is kept by the abutment 4. The pens 6 of the cylinder 7 rotating in the direction of the arrow are pushed into the material and surprisingly pull the fibers out in an undamaged state. The fibers are removed from the pens 6 by the comb 10.

The velocity of rotation depends on the quality of the material and is not allowed to be too high so tearing the fibers will be prevented. It has appeared that a suitable circumferential velocity is 1 cm/sec.

In the starting material the molecules of the synthetic material during polymerization are grown about the fibers. So the fibers are enclosed in a molecular structure of the synthetic material. During mechanically pulling the fibers out of the heated synthetic material the adherence coating remains on the fibers. By this coating the fibers without extra processing are suited to be processed together with new synthetic material to a product. The promoting features of the adherence of the fibers thus are apparently not lost.

Example

Waste strips derived from the production of corrugated panels comprising about 60 % thermosetting polyether and about 40 % glass fibers are processed in a device shown in the figures. The strips are heated to about 150°C. The fiber material remaining on the comb 10 gives 65 % of the whole. About 30 % of the whole was reduced to dust (in particular resin) and the remaining 5 % got lost as volatile components and very fine dust. The reclaimed fiber material comprised about two third of glass and about one third of adhered resin. The glass fibers scarcely show damages.

It will be clear that several modifications are possible for the device shown and for the method described, being within the scope of the invention. Essential are the heating of the waste material and the pulling of the fibers therethrough by protruding parts. Instead of the rotating cylinder a body provided with pens can be used that moves according to a parallellogram. It is even not excluded that the body with the pens does not move and the supply path moves. The comb 10 could be replaced by a brush. The length and the pens of the rotating speed of the cylinder 7 depend on the features of the synthetic material. Instead of pins also hooks, teeth and such can be applied. Material with a high content of filler will still be relatively harder at a higher temperature by which only relatively short pins are effective to crush the synthetic material and to pull out the fibers.

For the rest the invention is not restricted to the reclaiming of glass fibers but also some fibers with other features can be reclaimed.

The method according to the invention is of economic importance because reclaiming the fibers that can be processed to a new product is a great advantage.

- Claims -

## C L A I M S

1. Method for reclaiming fibers from waste of thermosetting synthetic material that is reinforced by fibers, <u>characterized in that</u> the waste material is heated to a temperature at which the mechanical features of the synthetic material are lost in substance and in that the fibers subsequently are pulled out of the synthetic material by teeth, hooks, pins or such protruding parts.

2. Method according to claim 1, <u>characterized in that</u> the heating temperature of the waste material is between 150°C to 350°C, preferably between 200°C and 300°C.

3. Method according to claim 1 or 2, <u>characterized in that</u> the waste material is advanced by a supply path along the heating device to an abutment means which is provided with openings, and that said protruding parts move through openings of the abutment means and take away the fibers.

4. Device for reclaiming from the waste thermosetting synthetic material reinforced by fibers, <u>characterized by</u> a supply path (1) for the waste material, a heating device (3) provided near said path, an abutment means (4) at the end of the path for holding the waste material, a number of openings (5) in the abutment means, a fiber removing means (7) provided with protruding parts (6) and a drive means (9) to drive said fiber-removing means (7) and thereby moving the protruding parts (6) through the openings (5) of the abutment means (4).

5. Device according to claim 4, <u>characterized in that</u> the teeth of a comb (10) extend between the protruding parts (6) for removing the fibers from these parts.

6. Fiber material obtained with the method according to claim 1, 2 or 3.

*******

# fig-1

# fig-2

# EUROPEAN SEARCH REPORT

**0120527**
Application number

EP 84 20 0301

## DOCUMENTS CONSIDERED TO BE RELEVANT

| Category | Citation of document with indication. where appropriate, of relevant passages | Relevant to claim | CLASSIFICATION OF THE APPLICATION (Int Cl ³) |
|---|---|---|---|
| A | US-A-3 847 664 (J.J.O. GRAVEL) <br> * Abstract; claims * | 1,6 | B 29 B 1/00 <br> B 03 B 1/02 <br> B 03 B 9/06 <br> C 03 B 37/10 <br> D 01 G 11/04 |
| A | US-A-3 253 897 (H.S. FALLS) <br> * Column 2, line 62 - column 4, line 44; claims; figures * | 1,6 | |
| A | FR-A-1 210 290 (P. MORRETON) <br> * Abstract; page 2, paragraphs 4-6; figures * | 3 | |
| A | DE-A-3 030 278 (TEMAFA) <br> * Whole document * | 4 | |
| A | DE-A-2 827 335 (TOPPAN PRINTING) <br> * Claims * | 1,2 | TECHNICAL FIELDS SEARCHED (Int. Cl. ³) |
| A | DE-A-2 739 023 (LOWE PAPER CO.) <br> * Claims * | 1 | B 29 B 1/00 <br> B 03 B 1/00 <br> B 03 B 9/00 <br> C 03 B 37/00 <br> D 01 G 11/00 <br> D 01 G 15/00 |

The present search report has been drawn up for all claims

| Place of search <br> THE HAGUE | Date of completion of the search <br> 08-06-1984 | Examiner <br> VANHECKE H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82